# EUROPÄISCHE PATENTSCHRIFT

(11) **EP 3 347 626 B1**
(45) Veröffentlichungstag und Bekanntmachung des Hinweises auf die Patenterteilung: **17.04.2019**
(21) Anmeldenummer: 16760053.5
(22) Anmeldetag: 31.08.2016
(51) Int. Cl.: F16H 63/34

(54) **PARKSPERRENVORRICHTUNG FÜR EIN KRAFTFAHRZEUGGETRIEBE**
PARKING BRAKE DEVICE FOR A MOTOR VEHICLE TRANSMISSION
DISPOSITIF DE FREIN DE STATIONNEMENT POUR UNE BOÎTE DE VITESSES DE VÉHICULE AUTOMOBILE

(30) Priorität: 07.09.2015 DE 102015217097
(43) Veröffentlichungstag der Anmeldung: 18.07.2018
(73) Patentinhaber: VOLKSWAGEN AKTIENGESELLSCHAFT, 38440 Wolfsburg (DE)
(72) Erfinder: HENNIG, Sebastian, 38104 Braunschweig (DE)
(86) Internationale Anmeldenummer: PCT/EP2016/070505
(87) Internationale Veröffentlichungsnummer: WO 2017/042073

(56) Entgegenhaltungen:
- CN-U- 204 164 337
- DE-A1- 19 933 618
- DE-A1-102008 054 469
- DE-A1-102010 000 725
- JP-A- 2013 095 251

## Beschreibung

Die Erfindung bezieht sich auf eine Parksperrenvorrichtung für ein eine Basis aufweisendes Kraftfahrzeuggetriebe, umfassend
- ein Parksperrenrad mit einer Sperrverzahnung,
- eine zwischen einer Freistellung und einer Eingriffsstellung um eine Sperrklinken-Schwenkachse schwenkbare Sperrklinke, die in Eingriffsstellung in die Sperrverzahnung eingreift und in Freistellung außer Eingriff mit der Sperrverzahnung steht und in Richtung der Freistellung federvorgespannt ist,
- ein Sicherungselement, mittels dessen die Sperrklinke in Freistellung sicherbar ist, indem ein Wirkabschnitt des Sicherungselementes eine Kante der Sperrklinke federvorgespannt hintergreift, und
- einen Betätigungsmechanismus, mittels dessen, in gesicherter Freistellung der Sperrklinke, das Sicherungselement aus seiner Hintergriffsstellung überführbar und die so entsicherte Sperrklinke durch Vortrieb eines Betätigungselementes in ihre Eingriffsstellung schwenkbar und dort verriegelbar ist.

Derartige Parksperrenvorrichtungen sind bekannt aus der DE 10 2010 000 725 A1.

Parksperrenvorrichtungen, insbesondere in Kraftfahrzeugen mit Automatikgetriebe, sind allgemein bekannt. Ziel einer solchen Vorrichtung ist es, ein abgestelltes Fahrzeug auch ohne Einsatz der Radbremsen gegen ein Wegrollen zu sichern. Hierzu trägt eine zentrale Abtriebswelle des Getriebes ein Parksperrenrad, welches eine in der Regel als Stirnverzahnung ausgebildete Sperrverzahnung trägt. Am Getriebegehäuse ist eine korrespondierende Sperrklinke angelenkt, die im eingelegten Zustand der Parksperre in die Sperrverzahnung eingreift und das Parksperrenrad und somit das Getriebe blockiert. Im gelösten Zustand der Parksperre ist die Sperrklinke derart verschwenkt, dass sie außer Eingriff mit der Sperrverzahnung steht. Die genannten Sperrklinkenstellungen sollen hier als Eingriffs- bzw. Freistellung bezeichnet werden.

Von wesentlicher Bedeutung ist es, dass die Sperrklinke in ihrer jeweiligen Stellung zuverlässig gesichert ist, um ein unabsichtliches Lösen der Sperrklinke bei abgestelltem Fahrzeug bzw. ein unbeabsichtigtes Einlegen der Parksperre bei bewegtem Fahrzeug zu verhindern. In Eingriffsstellung der Sperrklinke wird dies erreicht, indem ein Sperrelement, welches häufig zugleich als Betätigungselement für die Verschwenkung der Sperrklinke dient, in den Schwenkweg der Sperrklinke eingschoben wird, sodass dieser blockiert und die Sperrklinke in ihrer Eingriffsstellung verriegelt ist.

In ihrer Freistellung gehalten wird die Sperrklinke in der Regel durch eine in Freistellungsrichtung vorgespannte Feder. Diese kann bspw. als eine um die Schwenkachse der Sperrklinke gewickelte Torsionsfeder ausgebildet sein. Um auch bei Erschütterungen, bspw. durch Fahren auf unebenem Untergrund, und sogar bei Bruch der Feder ein unbeabsichtigtes Einrasten der Sperrklinke zu verhindern, schlägt die genannte, gattungsbildende Druckschrift vor, die Sperrklinke durch ein federndes Sicherungselement formschlüssig in der Freistellung zu sichern. Das bekannte Sicherungselement ist als eine Blattfeder ausgebildet, die mit ihrem Fuß gehäusefest fixiert ist und am freien Ende ihres Federarms einen abgewinkelten Wirkabschnitt aufweist, der eine korrespondierende Kante der Sperrklinke hintergreift. Das Lösen der Sicherung erfolgt im Zuge des bewussten Einlegens der Parksperre. Hierzu wird eine parallel zur Schwenkachse der Sperrklinke ausgerichtete Schubstange axial vorgeschoben. Die Schubstange trägt ein als Schiebehülse mit einem konischen Axialabschnitt ausgebildetes Betätigungselement. Das von der Schubstange durchsetzte Betätigungselement wird an seinem distalen Ende von einer gegen einen distalen Kragen der Schubstange abgestützten Druckfeder in proximaler Richtung kraftbeaufschlagt, wo es sich mit seinem als Anlaufschräge wirkenden, konischen Axialabschnitt an einer korrespondierenden Wechselwirkungsschräge der Sperrklinke abstützt. Vorschub der Schubstange bei gesicherter Sperrklinke führt dazu, dass das proximale Ende der Schubstange immer weiter durch die selbst positionsfixierte (wegen ihrer Anlage an der Schräge der Sperrklinke) Schiebehülse hindurch geschoben wird, während die Druckfeder komprimiert und die an der Wechselwirkungsschräge zwischen Schiebehülse und Sperrklinke wirkende Kraft erhöht wird. Schließlich erreicht das proximale Ende der Schubstange den Federarm der Blattfeder und lenkt diesen bei weiterem Vorschub so aus, dass der Wirkabschnitt der Blattfeder von der Kante der Sperrklinke freikommt, d.h. die Sperrklinke entsichert wird. Die entsicherte Sperrklinke verschwenkt dann entgegen ihrer Federvorspannung, getrieben von der an der Wechselwirkungsschräge zwischen Schiebehülse und Sperrklinke umgelenkten Federkraft, in ihre Eingriffsstellung mit dem Parksperrenrad. Die dabei weiter nach proximal schnappende Schiebehülse bewirkt zugleich die Verriegelung in dieser Eingriffsstellung.

Nachteilig bei der bekannte Parksperrenvorrichtung ist der Bauraumbedarf in schubstangenaxialer Richtung, bzw. in Richtung senkrecht zur Sperrklinken-Schwenkebene. Es ist die Aufgabe der vorliegenden Erfindung, eine gattungsgemäße Parksperrenvorrichtung derart weiterzubilden, dass eine Reduzierung des senkrecht zur Sperrklinken-Schwenkebene benötigten Bauraums möglich wird.

### Darlegung der Erfindung

Diese Aufgabe wird in Verbindung mit den Merkmalen des Oberbegriffs von Anspruch 1 dadurch gelöst, dass das Sicherungselement ausgebildet ist als ein an einem basisfesten Trägerelement angelenkter, sperrklinkenparallel schwenkbarer Drahtschnapper-Bügel mit einem Scheitelabschnitt und beidseitig des Scheitelabschnitts je einem Bügelarm, deren freie Armenden einander entgegengesetzt abgewinkelt und parallel versetzt zueinander an dem Trägerelement fixiert sind.

Bevorzugte Ausführungsformen der Erfindung sind Gegenstand der abhängigen Ansprüche.

Grundsätzlich wird an dem bekannten Gedanken festgehalten, die Sperrklinke in ihrer Freistellung mittels eines Federelementes formschlüssig zu sichern. Anstelle der eine senkrecht zur Sperrklinken-Schwenkebene gerichtete Kraft auf die Sperrklinke ausübenden Blattfeder wird erfindungsgemäß jedoch vorgeschlagen, ein in Bezug auf die Schwenkachse der Sperrklinke radial auf letztere, d.h. parallel zur Sperrklinken-Schwenkachse, wirkendes Federelement einzusetzen. Insbesondere wird vorgeschlagen hierzu einen sogenannten Drahtschnapper-Bügel zu verwenden. Das Prinzip des Drahtschnapper-Bügels ist bspw. von Karabinerhaken her bekannt. Ein Drahtschnapper-Bügel besteht im Wesentlichen aus einem Scheitelbereich, an den sich beidseitig je ein Bügelarm anschließt. Die freien Enden der Bügelarme sind einander entgegengesetzt abgewinkelt und parallel versetzt zueinander fixiert. In der Regel erfolgt die Versetzung in beiden zur Krümmungsebene des Scheitelbereichs senkrechten Richtungen. Es genügt jedoch auch die durch den Versatz in nur einer zur Krümmungsebene des Scheitelbereichs senkrechten Richtung erzeugte Asymmetrie, um - ein geeignetes Federmaterial der Arme vorausgesetzt - eine Federwirkung in Schwenkrichtung des Bügels zu erzeugen. Typische Materialien für den Drahtschnapper-Bügel sind metallische Federdrähte, bspw. auf Federstahl. Denkbar sind selbstverständlich auf nicht-metallische Federdrähte, bspw. aus geeigneten Kunst- oder Verbundstoffen. Details zur geeigneten Dimensionierung von Federkraft und -richtung, die sich insbesondere in der Materialwahl des Drahtschnapper-Bügels und des Versatzes seiner fixierten Enden widerspiegelt, sind dem Fachmann bekannt.

Der erfindungsgemäße Drahtschnapper-Bügel kann eine im Bereich der Sperrklinken-Stirnseite ausgebildete Kante hintergreifen und so die Sperrklinke sichern. Bei der Kante kann es sich um eine freie Kante oder die Kante einer Hinterschneidung handeln. Zum Entsichern wird der Drahtschnapper-Bügel entgegen seiner Federkraft ausgelenkt, sodass die Kante von seinem Hintergriff freikommt. Diese Entsicherung muss aktiv erfolgen. Bevorzugte Ausführungsformen dazu sollen weiter unten diskutiert werden. Im unbetätigten Zustand ist der Drahtschnapper-Bügel aufgrund seiner Federvorspannung gegen die Stirnseite der Sperrklinke vorgespannt, sodass er, sobald die Sperrklinke in ihrer Freistellung ist, in seine Hintergriffsstellung einschnappt. Aufgrund der Verschwenkbarkeit des Drahtschnapper-Bügels in der Sperrklinkenebene, bedarf es, anders als beim Stand der Technik, keines zusätzlichen Bauraumes in Richtung der Sperrklinkenbreite (d.h. in Richtung der Sperrklinken-Schwenkachse bzw. parallel dazu).

Bevorzugt weist das Betätigungselement eine Wirkfläche auf, mittels derer es bei seinem Vortrieb zunächst mit dem Drahtschnapper-Bügel zu dessen Überführung aus der Hintergriffsstellung und sodann mit der Sperrklinke zu deren Verschwenkung in die Eingriffsstellung wechselwirkt. Mit anderen Worten ist bevorzugt vorgesehen, dass es dasselbe Betätigungselement ist, welches bei seinem Vorschub für die Entsicherung der Sperrklinke und dann für die Verschwenkung der Sperrklinke sorgt. Dies ist bei der erfindungsgemäßen Ausführungsform des Sicherungselementes als Drahtschnapper-Bügel möglich, weil hieranders als beim Stand der Technik - das Sicherungselement eine betätigungselementseitige Angriffsfläche, nämlich seinen betätigungselementseitigen Arm, bietet.

Günstigerweise ist die Wirkfläche des Betätigungselementes, wie grundsätzlicherweise aus dem Stand der Technik bekannt, als eine Anlaufschräge eines senkrecht zur Sperrklinkenebene verschiebbaren Betätigungselementes ausgebildet, insbesondere ist die Anlaufschräge bevorzugt als konischer Axialabschnitt einer Schiebehüsle ausgebildet. Die Wirkung einer derart konifizierten Schiebehülse wurde eingangs bei der Diskussion des Standes der Technik bereits erläutert. Der Fachmann wird verstehen, dass der aus Sicht der Schiebehülse "vor" der Sperrklinke liegende Arm des Drahtschnapper-Bügels beim Vorschub der Schiebehülse zeitlich vor einer Wechselwirkungsfläche der Sperrklinke mit der Anlaufschräge wechselwirkt, was zu der gewünschten Verschwenkung des Drahtschnapper-Bügels zeitlich vor der danach erst möglichen Verschwenkung der Sperrklinke führt.

Allerdings ist der Fachmann bei der Realisierung dieser Ausführungsform darauf angewiesen, dass sowohl ein Armabschnitt des Drahtschnapper-Bügels als auch eine geeignete Wechselwirkungsfläche der Sperrklinke im Wirkbereich des Betätigungselementes, insbesondere seiner Anlaufschräge, insbesondere des konischen Axialabschnitts der Schiebehülse, angeordnet sind. Dieser Wirkbereich ist jedoch typischerweise relativ weit entfernt von der typischerweise im Bereich der Sperrklinken-Stirnfläche angeordneten Kante, die von dem Wirkabschnitt, insbesondere dem Scheitelbereich, des Drahtschnapper-Bügels hintergriffen werden soll. Zur Lösung dieses Problems ist bei einer Weiterbildung der Erfindung vorgesehen, dass wenigstens der betätigungselementseitige Bügelarm in einer zur Sperrklinkenebene parallelen Ebene gebogen ausgebildet ist und einen mit der Anlaufschräge des Betätigungselementes wechselwirkenden, quer zur Längserstreckungsrichtung der Sperrklinke ausgerichteten, armendnahen, ersten Armabschnitt und einen in Längserstreckungsrichtung der Sperrklinke ausgerichteten, scheitelnahen, zweiten Armabschnitt aufweist. Der armendnahe, erste Armabschnitt dient somit der Wechselwirkung mit dem Betätigungselement und erstreckt sich innerhalb dessen Wirkbereichs. Im Fall einer konifizierten Schiebehülse erstreckt er sich bevorzugt tangential zu deren konischer Anlaufschräge. Der zweite, scheitelnahe Armabschnitt dient der Verbindung des ersten Armabschnitts mit dem Wirkabschnitt des Drahtschnapper-Bügels, d.h. in der Regel seinem Scheitelabschnitt, der die Kante der Sperrklinke hintergreift. Bildlich gesprochen umgreift also der Drahtschnapper-Bügel - wenigsten einseitig - die Sperrklinken-Stirnseite und die daran angrenzende Sperrklinken-Wange nach Art eines Käfigs. Auf der betätigungselementfernen Seite kann der Drahtschnapper-Bügel ebenfalls in der vorbeschriebenen Weise ausgebildet sein, sodass ein vollständiger Käfig gebildet wird. Dies ist jedoch nicht erforderlich; vielmehr kann der betätigungselementferne Bügelarm des Drahtschnapper-Bügel als im Wesentlichen direkte Verbindung zwischen dem Scheitelbereich und dem abgewinkelten Armende ausgebildet sein.

Wie im Grunde vom Stand der Technik her bekannt, ist es auch im Rahmen der vorliegenden Erfindung bevorzugt vorgesehen, dass die Schiebehülse von einer axial verschiebbaren Schubstange durchsetzt und mittels einer sich einerseits gegen die Schiebehülse und andererseits gegen einen distalen Kragen der Schubstange abstützenden Druckfeder in ihrer Vorschubrichtung federvorgespannt ist. Die Durchsetzung der Schiebehülse erfolgt im Rahmen der Erfindung jedoch im Wesentlichen nur, um auch im Fall einer "Zahn-auf-Zahn"-Stellung von Sperrklinke und Parksperrenrad den Vorschub der Schubstange zu ermöglichen. Die dabei aufgebaute Federkraft auf die Schiebehülse genügt, um die Sperrklinke bereits zu entsichern. Geringfügige Rollbewegung des Fahrzeugs und eine entsprechende, geringfügige Rotation des Parksperrenrades führt dann dazu, dass die Sperrklinke selbsttätig in die Sperrverzahnung einrastet. Der Überstand der Schubstange über das proximale Ende der Schiebehülse ist auch bei der erläuterten "Zahn-auf-Zahn"-Stellung deutlich geringer als beim Stand der Technik, da der die Schiebehülse überragende Teil der Schubstange aufgrund der Erfindung nicht zur Entsicherung der Sperrklinke benötigt wird.

Um einen geschmeidigen Ablauf beim Einlegen der Parksperre zu gewährleisten ist typischerweise die Federkraft der die Schiebehülse beaufschlagenden Druckfeder deutlich größer als die Federvorspannung des Drahtschnapper-Bügels. Dieser wird bevorzugt beim Vorschub der Schiebehülse ausgelenkt, ohne dass die dabei auf die Schiebehülse nach distal wirkende Kraft zu einer erheblichen Kompression der Druckfeder führt. In unbetätigter Stellung, z.B. im Fahrbetrieb des Kraftfahrzeugs, muss also die Schiebehülse so weit zurückziehbar sein, dass sie nicht mit dem Drahtschnapper-Bügel wechselwirkt. Daher ist bevorzugt vorgesehen, dass die Schubstange eine proximalen Kragen aufweist, der als ein Anschlag für die in ihrer Vorschubrichtung federvorgespannte Schiebhülse wirkt. Anders als beim Stand der Technik kann sich die Schiebehülse nämlich in unbetätigter Stellung der Parksperre nicht an der Sperrklinke abstützen. Dies würde nämlich, wie oben erläutert, zu einer Entsicherung der Parksperre führen. Stattdessen ist bei der beschriebenen, bevorzugten Ausführungsform ein Anschlag an der Schubstange vorgesehen, gegen den sich die Schiebehülse abstützen kann, sodass sie zusammen mit der Schubstange hinreichend weit zurückgezogen werden kann, um nicht in Wechselwirkung mit dem Drahtschnapper-Bügel zu treten.

Weitere Merkmale und Vorteile der Erfindung ergeben sich aus der nachfolgenden, speziellen Beschreibung und den Zeichnungen.

Es zeigen:
- Figur 1: eine perspektivische Darstellung einer erfindungsgemäßen Parksperrenvorrichtung in ihrer gesicherten Stellung,
- Figur 2: die Parksperrenvorrichtung von Figur 1 in ihrer entsicherten Stellung,
- Figur 3: die Parksperrenvorrichtung von Figur 1 mit ihrer Sperrklinke in Eingriffsstellung,
- Figur 4: eine ausschnittsweise Darstellung des Trägerelementes der Parksperrenvorrichtung von Figur 1,
- Figur 5: eine perspektivische Darstellung des Drahtschnapper-Bügels der Parksperrenvorrichtung von Figur 1.

Gleiche Bezugszeichen in den Figuren weisen auf gleiche oder analoge Elemente hin.

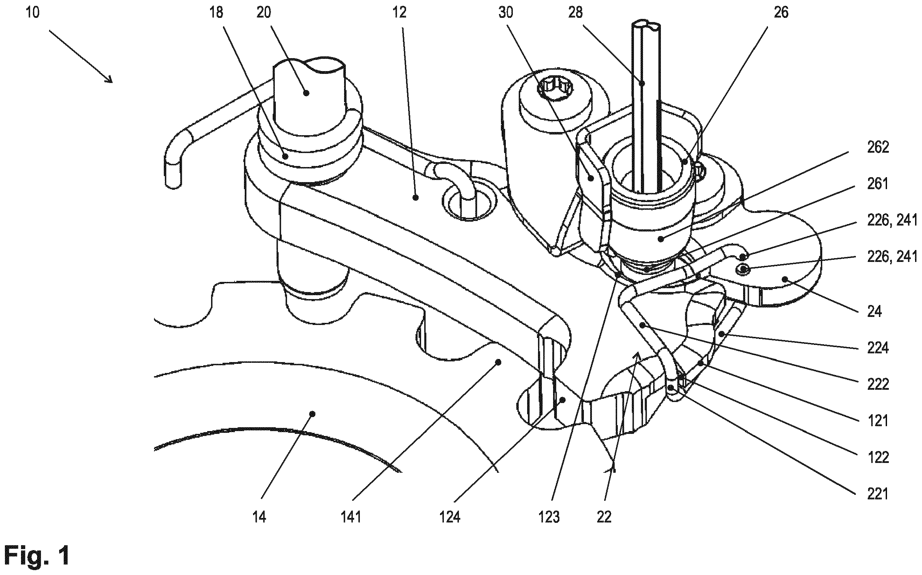

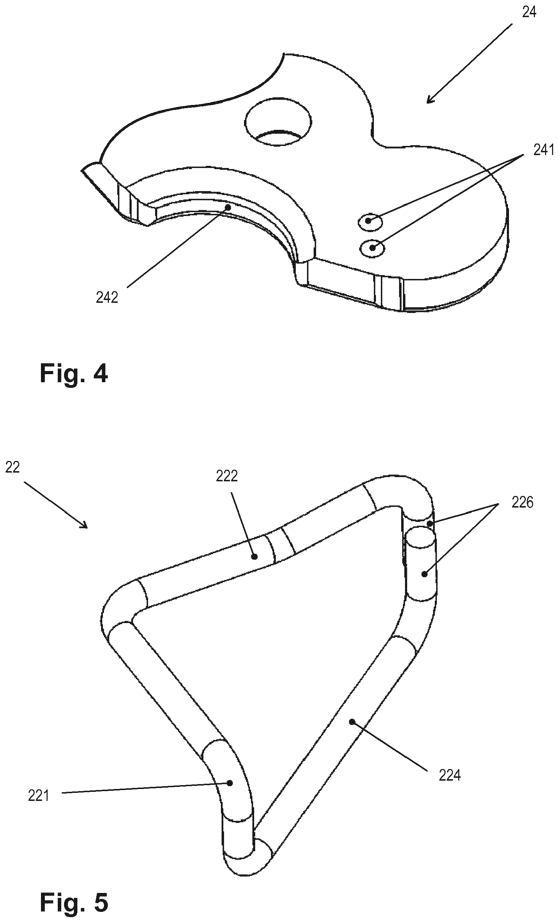

Die Figuren 1-3 zeigen eine bevorzugte Ausführungsform einer erfindungsgemäßen Parksperrenvorrichtung 10 in drei unterschiedlichen Stellungen. Die Figuren 4 und 5 zeigen (teils nur ausschnittsweise) einzelne Elemente der Parksperrenvorrichtung 10 der Figuren 1-3.

Figur 1 zeigt die Parksperrenvorrichtung 10 in einer Stellung, in der sich die Sperrklinke 12 in ihrer Freistellung, d.h. ohne Zahneingriff in die Sperrverzahnung 141 eines Parksperrenrades 14 befindet. Die Sperrklinke 12 ist hierzu in Richtung der Federkraft einer Torsionsfeder 18, welche um die Sperrklinken-Schwenkachse 20 gewickelt ist, verschwenkt. In dieser Freistellung ist sie mittels eines Drahtschnapper-Bügels 22, mit der mit seinem Scheitelbereich 221 eine Kante 122 in der Stirnseite 121 der Sperrklinke 12 hintergreift, gesichert. Selbst bei einem Bruch der Torsionsfeder 18 kann die Sperrklinke 12 somit nicht in die Sperrverzahnung 141 des Parksperrenrades 14 einrasten.

Der Drahtschnapper-Bügel 22 ist in Figur 5 vergrößert und isoliert dargestellt. Beidseitig an seinen Scheitelbereich 221 schließen sich je ein Bügelarm an, nämlich ein in Figur 1 oberhalb der Sperrklinke 12 gezeigter, betätigungselementseitiger Bügelarm 222 und ein in Figur 1 unterhalb der Sperrklinke 12 liegender, betätigungselementabgewandeter Bügelarm 224, an. Die freien Enden jedes Bügelarms 222, 224 sind, wie insbesondere in Figur 5 erkennbar, entgegengesetzt parallel zueinander abgewinkelt. Diese Armenden 226 sind in entsprechend positionierten Bohrungen 241 eines Trägerelements 24 fixiert. Das Trägerelement 24 ist an einem in den Figuren nicht dargestellten Gehäuse fixiert. Die Bohrungen 241 sind parallel versetzt zueinander angeordnet. Eine Verschwenkung des Drahtschnapper-Bügels im Sinne einer sperrklinkenparallelen Auslenkung seines Scheitelbereichs 221 setzt sich bei genauerer Betrachtung zusammen aus je einer Verschwenkung der Bügelarme 222, 224 um unterschiedliche Schwenkachsen, nämlich um ihre parallel zueinander versetzten Armenden 226. Dies führt aufgrund der Verbindung der Bügelarme 222, 224 im Scheitelbereich 221 zu einer Verspannung des Drahtschnapper-Bügels, was bei geeigneter, federnder Materialwahl des Drahtschnapper-Bügels 22 zu einer der Verschwenkung entgegenwirkenden Federkraft führt. Die Sperrklinke 12 ist somit in ihrer in Figur 1 gezeigten Freistellung formschlüssig gesichert, wobei die Beibehaltung des Formschlusses durch die Federkraft des Drahtschnapper-Bügels dauerhaft gewährleistet bleibt.

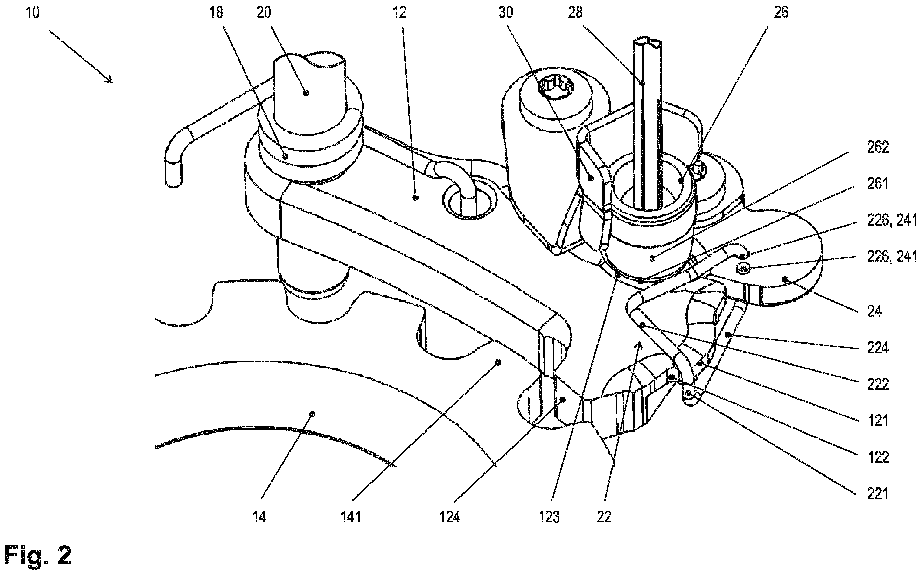

Figur 2 zeigt die Parksperrenvorrichtung 10 mit ihrer Sperrklinke 12 noch immer in Freistellung, jedoch nichtmehr gesichert. Beim Vergleich der Figuren 1 und 2 ist erkennbar, dass ein als Schiebehülse 26 ausgebildetes Betätigungselement zusammen mit einer Schubstange 28 senkrecht zur Sperrklinkenschwenkebene vorgeschoben wird. Hierbei kontaktiert ein konischer Axialabschnitt 261 der Schiebehülse 26 den betätigungselementseitigen Bügelarm 222 des Drahtschnapper-Bügels 22. Der konische Axialabschnitt 261 dient dabei als Anlaufschräge, die eine Verschwenkung des Drahtschnapper-Bügels in der Sperrklinken-Schwenkebene bewirkt, sodass sein Scheitelabschnitt 221 von der Kante 122 freikommt. In dieser Position ist die Sperrklinke 12 ungesichert, gleichwohl wird sie durch die Kraft der Torsionsfeder 18 nach wie vor in ihrer Freistellung gehalten.

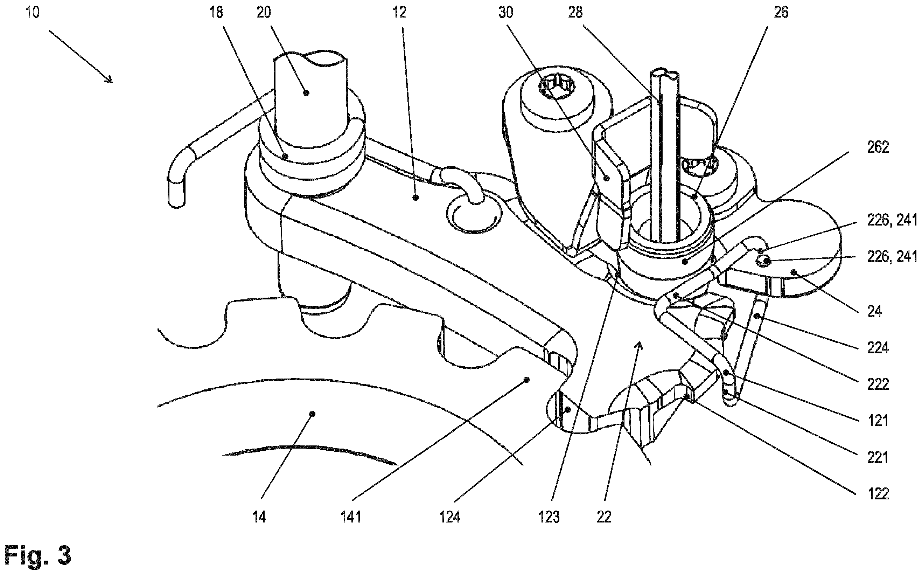

Figur 3 zeigt die Parksperrenvorrichtung 10 im Zustand eines weiteren Vorschubs der Schubstange 28 und mit ihr der Schiebehülse 26. Der Drahtschnapper-Bügel 22 wird durch Anlage am zylindrischen Axialabschnitt 262 der Schiebehülse 26 weiter in seiner verschwenkten Entsicherungsstellung gehalten. Der konische Axialabschnitt 261 der Schiebehülse 26 jedoch wechselwirkt in dieser Stellung mit einer korrespondierenden Anschrägung 123 der Sperrklinke 12 und drückt diese daher entgegen der Federkraft der Torsionsfeder 18 in ihre Eingriffsstellung, in der ihre Nase 124, die Sperrverzahnung 141 des Parksperrenrades 14 eingreift.

Um eine seitliche Verbiegung der Schubstange 28 zu verhindern erfolgt der Vorschub der Schiebehülse 26 geführt. Hierzu ist ein Führungsschild 30 vorgesehen, welches am Trägerelement 24 festgelegt ist. Zudem weist das Trägerelement 24 selbst eine dem konischen Axialabschnitt 261 angepasste Schräge 242 auf, die die Schiebehülse 26 gegen die Federkraft der Torsionsfeder 18 abzustützen vermag.

Nicht dargestellt in den Figuren 1-3 ist eine die Schubstange 28 umwendelnde Druckfeder, die sich einerseits gegen eine Schulter der Schiebehülse 26 und andererseits gegen einen nicht dargestellten, distalen Kragen der Schubstange 28 abstützt. Sollte nämlich, anders als in den Figuren 1-3 dargestellt das Parksperrenrad 16 in einer solchen Winkelposition stehen, dass ein Zahn der Sperrverzahnung 141 mit der Nase 124 der Sperrklinke 12 kollidiert, kann die Sperrklinke 12 der hervorgeschobenen Schiebehülse 26 nicht durch Verschwenkung ausweichen. Gleichwohl soll das "Einlegen" der Parksperre möglich sein. Daher durchsetzt die Schubstange 28 in nicht dargestellter Weise die Schiebehülse 26, sodass bei Vorschub der Schubstange in der zuvor geschilderten Situation die Schiebehülse auf der Schubstange verschoben und dabei besagte Druckfeder gespannt wird. Es genügt dann eine geringfügige Bewegung des Parksperrenrades 14, sodass die Nase 124 der Sperrklinke 12 gegenüber einer Zahnlücke der Sperrverzahnung 141 positioniert wird. Die Schiebehülse 26 wird dann durch die Kraft der gespannten Druckfeder vorgeschoben, sodass die sich in Figur 3 gezeigte Position einstellt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Parksperrenvorrichtung
- 12: Sperrklinke
- 121: Stirnseite von 12
- 122: Kante in 121
- 123: Schräge von 12
- 124: Nase von 12
- 14: Parksperrenrad
- 141: Sperrverzahnung
- 18: Torsionsfeder
- 20: Schwenkachse für 12
- 22: Drahtschnapper-Bügel
- 221: Scheitelbereich von 22
- 222: betätigungselementseitiger Bügelarm
- 224: betätigungselementabgewandter Bügelarm
- 226: Armende
- 24: Trägerelement
- 241: Bohrung
- 242: Anschrägung
- 26: Betätigungselement/Schiebehülse
- 261: konischer Axialabschnitt von 26
- 262: zylindrischer Axialabschnitt von 26
- 28: Schubstange
- 30: Führungsschild

## Patentansprüche

1. Parksperrenvorrichtung für ein eine Basis aufweisendes Kraftfahrzeuggetriebe, umfassend
- ein Parksperrenrad (14) mit einer Sperrverzahnung (141),
- eine zwischen einer Freistellung und einer Eingriffsstellung um eine Sperrklinken-Schwenkachse (20) schwenkbare Sperrklinke (12), die in Eingriffsstellung in die Sperrverzahnung (141) eingreift und in Freistellung außer Eingriff mit der Sperrverzahnung (141) steht und in Richtung der Freistellung federvorgespannt ist,
- ein Sicherungselement (22), mittels dessen die Sperrklinke (12) in Freistellung sicherbar ist, indem ein Wirkabschnitt (221) des Sicherungselementes (22) eine Kante der Sperrklinke (12) federvorgespannt hintergreift, und
- einen Betätigungsmechanismus (26, 28), mittels dessen, in gesicherter Freistellung der Sperrklinke (12), das Sicherungselement (22) aus seiner Hintergriffsstellung überführbar und die so entsicherte Sperrklinke (12) durch Vortrieb eines Betätigungselementes (26) in ihre Eingriffsstellung schwenkbar und dort verriegelbar ist,
**dadurch gekennzeichnet,**
**dass** das Sicherungselement ausgebildet ist als ein an einem basisfesten Trägerelement (24) angelenkter, sperrklinkenparallel schwenkbarer Drahtschnapper-Bügel (22) mit einem Scheitelabschnitt (221) und beidseitig des Scheitelabschnitts (221) je einem Bügelarm (222, 224), deren freie Armenden (226) einander entgegengesetzt abgewinkelt und parallel versetzt zueinander an dem Trägerelement (24) fixiert sind.

2. Parksperrenvorrichtung nach Anspruch 1,
**dadurch gekennzeichnet,**
**dass** das Betätigungselement (26) eine Wirkfläche (261) aufweist, mittels derer es bei seinem Vortrieb zunächst mit dem Drahtschnapper-Bügel (22) zu dessen Überführung aus der Hintergriffsstellung und sodann mit der Sperrklinke (12) zu deren Verschwenkung in die Eingriffsstellung wechselwirkt.

3. Parksperrenvorrichtung nach Anspruch 2,
**dadurch gekennzeichnet,**
**dass** die Wirkfläche (261) als eine Anlaufschräge des senkrecht zur Sperrklinkenebene verschiebbaren Betätigungselementes (26) ausgebildet ist.

4. Parksperrenvorrichtung nach Anspruch 3,
**dadurch gekennzeichnet,**
**dass** die Anlaufschräge als konischer Axialabschnitt (261) einer Schiebehülse (26) ausgebildet ist.

5. Parksperrenvorrichtung nach einem der vorangehenden Ansprüche,
**dadurch gekennzeichnet,**
**dass** der Wirkabschnitt des Drahtschnapper-Bügels (22) dessen Scheitelabschnitt (221) ist.

6. Parksperrenvorrichtung nach Anspruch 5, soweit rückbezogen auf einen der Ansprüche 3 bis 4,
**dadurch gekennzeichnet,**
**dass** wenigstens der betätigungselementseitige Bügelarm (222) des Drahtschnapper-Bügels (22) in einer zur Sperrklinkenebene parallelen Ebene gebogen ausgebildet ist und einen mit der Anlaufschräge (261) des Betätigungselementes (26) wechselwirkenden, quer zur Längserstreckungsrichtung der Sperrklinke (12) ausgerichteten, armendnahen, ersten Armabschnitt und einen in Längserstreckungsrichtung der Sperrklinke (12) ausgerichteten, scheitelnahen, zweiten Armabschnitt aufweist.

7. Parksperrenvorrichtung nach einem der Ansprüche 4 oder 5 bis 6, soweit rückbezogen auf dem Anspruch 4,
**dadurch gekennzeichnet,**
**dass** die Schiebehülse von einer axial verschiebbaren Schubstange durchsetzt und mittels einer sich einerseits gegen die Schiebehülse und andererseits gegen einen distalen Kragen der Schubstange abstützenden Druckfeder in ihrer Vorschubrichtung federvorgespannt ist.

8. Parksperrenvorrichtung nach Anspruch 7,
**dadurch gekennzeichnet,**
**dass** die Schubstange einen proximalen Kragen aufweist, der als ein Anschlag für die in ihrer Vorschubrichtung federvorgespannte Schiebehülse wirkt.

## Claims

1. Parking lock device for a motor vehicle transmission which has a base, comprising
- a parking lock wheel (14) with a locking toothing (141),
- a pawl (12) which is pivotable about a pawl pivot axis (20) between a release position and an engagement position and which, in the engagement position, engages into the locking toothing (141) and which, in the release position, is out of engagement with the locking toothing (141) and which is spring-preloaded in the direction of the release position,
- a securing element (22) by means of which the pawl (12) can be secured in the release position by virtue of an action portion (221) of the securing element (22) engaging in spring-preloaded fashion behind an edge of the pawl (12), and
- an actuation mechanism (26, 28), by means of which, in the secured release position of the pawl (12), the securing element (22) can be transferred out of its engaging-behind position and the thus unsecured pawl (12) can, by propulsion of an actuation element (26), be pivoted into its engagement position and locked there,
**characterized**
**in that** the securing element is formed as a pivotable snap-action wire clip (22) which is articulated on a carrier element (24) fixed with respect to the base and which is parallel to the pawl and which has an apex portion (221) and, to both sides of the apex portion (221), in each case one clip arm (222, 224), the free arm ends (226) of which are angled oppositely to one another and are fixed, parallel and offset with respect to one another, to the carrier element (24).

2. Parking lock device according to Claim 1,
**characterized**
**in that** the actuation element (26) has an action surface (261) by means of which, during the propulsion of said actuation element, said actuation element interacts firstly with the snap-action wire clip (22) in order to transfer the latter out of the engaging-behind position and then with the pawl (12) in order to pivot the latter into the engagement position.

3. Parking lock device according to Claim 2,
**characterized**
**in that** the action surface (261) is formed as a run-on bevel of the actuation element (26) which is displaceable perpendicularly with respect to the pawl plane.

4. Parking lock device according to Claim 3,
**characterized**
**in that** the run-on bevel is formed as a conical axial portion (261) of a sliding sleeve (26).

5. Parking lock device according to any of the preceding claims,
**characterized**
**in that** the action portion of the snap-action wire clip (22) is the apex portion (221) thereof.

6. Parking lock device according to Claim 5, where referred back to either of Claims 3 and 4,
**characterized**
**in that** at least that clip arm (222) of the snap-action wire clip (22) which is situated at the actuation element side is formed so as to be bent in a plane parallel to the pawl plane and has a first arm portion, which interacts with the run-on bevel (261) of the actuation element (26) and which is oriented transversely with respect to the longitudinal extent direction of the pawl (12) and which is situated close to the arm end, and a second arm portion, which is oriented in the longitudinal extent direction of the pawl (12) and which is close to the apex.

7. Parking lock device according to any of Claims 4 or 5 to 6, where referred back to Claim 4,
**characterized**
**in that** the sliding sleeve is extended through by an axially displaceable thrust rod and is spring-preloaded in its thrust direction by means of a pressure spring which is supported at one side against the sliding sleeve and at the other side against a distal collar of the thrust rod.

8. Parking lock device according to Claim 7,
**characterized**
**in that** the thrust rod has a proximal collar, which acts as a stop for the sliding sleeve which is spring-preloaded in its thrust direction.

## Revendications

1. Dispositif de blocage de stationnement destiné à une transmission de véhicule automobile comportant une base, le dispositif comprenant
- une roue de blocage de stationnement (14) pourvue d'une denture de bocage (141),
- un cliquet de blocage (12) qui peut pivoter sur un axe de pivotement (20) entre une position de libération et une position d'engagement, qui s'engage, dans la position d'engagement, dans la denture de blocage (141), qui est désengagé, dans la position de libération, de la denture de cliquet (141) et qui est précontraint par un ressort en direction de la position de libération ;
- un élément de sécurisation (22) qui permet de sécuriser le cliquet de blocage (12) dans la position de libération, en ce qu'une partie active (221) de l'élément de sécurisation (22) s'engage en arrière d'un bord du cliquet de blocage (12), et
- un mécanisme d'actionnement (26, 28) qui permet, lorsque le cliquet de blocage (12) est dans la position de sécurisation, à l'élément de fixation (22) de quitter sa position d'engagement arrière et au cliquet de blocage (12) ainsi déverrouillé de pivoter, grâce à l'avancement d'un élément d'actionnement (26), jusque dans sa position d'engagement où il peut être verrouillé,
**caractérisé en ce que**
l'élément de sécurisation est réalisé sous la forme d'un étrier de blocage de fil (22) relié de manière articulée à un élément de support (24) fixé à une base, pouvant pivoter parallèlement au cliquet de blocage et comportant une partie de sommet (221) et un bras d'étrier (222, 224) de chaque côté de la partie de sommet (221), les extrémités libres (226) des bras étant fixées à l'élément de support (24) et étant coudées à l'opposé les unes des autres et en étant décalées parallèlement les unes aux autres.

2. Dispositif de blocage de stationnement selon la revendication 1,
**caractérisé en ce que**
l'élément d'actionnement (26) présente une surface active (261) lui permettant d'interagir tout d'abord avec l'étrier de blocage de fil (22) pour lui faire quitter la position d'engagement arrière, puis avec le cliquet de blocage (12) pour le faire pivoter dans la position d'engagement.

3. Dispositif de blocage de stationnement selon la revendication 2,
**caractérisé en ce que**
la surface active (261) est conçue comme une pente de démarrage de l'élément d'actionnement (26) déplaçable perpendiculairement au plan du cliquet de blocage.

4. Dispositif de blocage de stationnement selon la revendication 3,
**caractérisé en ce que**
la pente de démarrage est conçue comme une partie axiale conique (261) d'un manchon coulissant (26).

5. Dispositif de blocage de stationnement selon l'une des revendications précédentes,
**caractérisé en ce que**
la partie active de l'étrier de bocage de fil (22) est sa partie de sommet (221) .

6. Dispositif de blocage de stationnement selon la revendication 5, dans la mesure où elle renvoie à l'une des revendications 3 et 4,
**caractérisé en ce que**
au moins le bras (222) côté élément d'actionnement de l'étrier de blocage de fil (22) est plié dans un plan parallèle au plan du cliquet de blocage et comporte une première partie de bras, proche de l'extrémité de bras, qui interagit avec la pente de démarrage (261) de l'élément d'actionnement (26) et qui est orientée transversalement à la direction d'extension longitudinale du cliquet de blocage (12) et une deuxième partie de bras, proche du sommet, qui est orientée dans la direction d'extension longitudinale du cliquet de blocage (12).

7. Dispositif de blocage de stationnement selon l'une des revendications 4 ou 5 et 6, dans la mesure où elle renvoie à la revendication 4,
**caractérisé en ce que** le manchon coulissant est traversé par une tige de poussée déplaçable axialement et est précontraint par ressort dans sa direction d'avancement au moyen d'un ressort de compression s'appuyant d'une part contre le manchon coulissant et d'autre part contre un rebord distal de la tige de poussée.

8. Dispositif de blocage de stationnement selon la revendication 7,
**caractérisé en ce que**
la tige de poussée comporte un rebord proximal qui agit comme une butée pour le manchon coulissant précontraint par ressort dans sa direction d'avancement.
